# EUROPÄISCHE PATENTSCHRIFT

(11) **EP 3 236 215 B1**
(45) Veröffentlichungstag und Bekanntmachung des Hinweises auf die Patenterteilung: **27.06.2018**
(21) Anmeldenummer: 16166630.0
(22) Anmeldetag: 22.04.2016
(51) Int. Cl.: G01D 18/00, G01D 5/14, B65G 15/22, B65G 43/00

(54) **VERFAHREN, LINEARANTRIEB UND ANLAGE**
METHOD, LINEAR ACTUATOR AND INSTALLATION
PROCEDE, ENTRAINEMENT LINEAIRE ET INSTALLATION

(43) Veröffentlichungstag der Anmeldung: 25.10.2017
(73) Patentinhaber: Siemens Aktiengesellschaft, 80333 München (DE); FESTO AG & Co. KG, 73734 Esslingen (DE)
(72) Erfinder: Albert, Fabian, 71394 Kernen im Remstal (DE); Hartramph, Ralf, 73095 Albershausen (DE); Hofmann, Chris, 70563 Stuttgart (DE); Jäntsch, Michael, 91052 Erlangen (DE); Rothe, Sven, 99891 Tabarz (DE); Spindler, Carsten, 07368 Remptendorf (DE); Veit, Andreas, 70794 Filderstadt (DE)

(56) Entgegenhaltungen:
- DD-A1- 208 855
- DE-A1-102012 104 840
- DE-A1-102012 205 902
- FR-A1- 2 897 682
- JP-A- 2009 276 262

## Beschreibung

Die Erfindung betrifft ein Verfahren zur Ermittlung und ein Verfahren zur Korrektur eines Positionsfehlers. Weiter betrifft die Erfindung ein Verfahren zum Betrieb eines Linearantriebs, einen Linearantrieb und eine Anlage mit einem solchen Linearantrieb.

Heute sind Linearantriebe weit verbreitet in industriellen Anlagen, Werkzeugmaschinen und Produktions- und Verarbeitungsstätten.

Linearantriebe weisen meist Segmente und darauf bewegliche Läufer auf, wobei die Läufer zur Positionierung und/oder zum Transport von Werkstücken und Gütern auf den Segmenten vorgesehen sind. Linearantriebe können als Förderbänder oder als Linearantriebe, die zumindest bereichsweise durch Linearmotoren ergänzt sind, ausgebildet sein. Die Segmente sind dabei als Förderbänder oder als Linearmotor-Statoren ausgeführt.

Zunehmend ist eine möglichst genaue Positionierung der Werkstücke und Güter durch den Linearantrieb entscheidend.

Für einige Anwendungen ist eine hohe Genauigkeit der Positionierung der Läufer notwendig.

Zur Bestimmung der Position der Läufer dienen meist Sensoren, beispielhaft Hallsensoren.

EP 1 720 026 B1 und DE 10 2012 205 902 A1 zeigen solche Sensoren, welche zur Bestimmung einer Position von einem Magnetelementen geeignet sind.

Es ist Aufgabe der Erfindung, ein Verfahren zur Ermittlung und zur Korrektur von Positionsfehlern, insbesondere für Linearantriebe, bereitzustellen.

Die Aufgabe wird mit einem Verfahren zur Ermittlung eines Positionsfehlers gemäß Anspruch 1 gelöst.

Die Aufgabe wird weiter durch ein Verfahren zur Korrektur eines Positionsfehlers gemäß Anspruch 11 gelöst.

Die Aufgabe wird weiter durch ein Verfahren zum Betrieb eines Linearantriebs gemäß einem der Anspruch 13 gelöst.

Die Aufgabe wird weiter durch einen Linearantrieb gemäß Anspruch 14 und durch eine Anlage gemäß Anspruch 15 mit einem solchen Linearantrieb gelöst.

Vorteilhafte Ausgestaltungen und Weiterbildungen der Verfahren sind Gegenstand der abhängigen Ansprüche.

Bei dem Verfahren zur Ermittlung eines Positionsfehlers für einen Linearantrieb ist vorgesehen, dass der Linearantrieb Läufer, zumindest ein Segment und eine Steuereinrichtung umfasst, wobei der jeweilige Läufer ein Detektionselements aufweist, wobei die jeweilige Position des jeweiligen Läufer anhand des Detektionselements durch zumindest einen Sensor ermittelt wird, wobei das Verfahren zumindest folgende Schritte umfasst:
- Bestimmung der jeweiligen Position und/oder Ausrichtung des Detektionselements eines ersten Läufers und weiterer Läufer,
- Vergleich der jeweiligen Position und/oder der Ausrichtung des Detektionselements der jeweiligen weiteren Läufer mit der Position und/oder Ausrichtung des jeweiligen Detektionselements des ersten Läufers zur Bestimmung von Abweichungen zwischen der Position und/oder der Ausrichtung des Detektionselements der jeweiligen weiteren Läufers und der jeweiligen Position und/oder Ausrichtung des Detektionselements des ersten Läufers,
- Zuordnung der jeweiligen Abweichung dem jeweils weiteren Läufer,
- Bestimmung einer Diskrepanz des Sensors mit Hilfe des ersten Läufers,
- Zuordnung der jeweiligen Diskrepanz zu dem entsprechenden Sensor,
- Bestimmung des Positionsfehlers des jeweiligen Läufers durch Verknüpfung der Abweichung des jeweiligen weiteren Läufers und der Diskrepanz des Sensors.

Unter einem Linearantrieb wird ein lineares Transportsystem verstanden, wobei Läufer zum Transport und/oder zur Positionierung von Gütern und Werkstücken vorgesehen sind.

Das Segment dient zur Bewegung des jeweiligen Läufers. Das Segment dient zum Transport und/oder zur Positionierung des Läufers im Bereich des jeweiligen Segments. Ein Segment kann als Stator eines Linearmotors ausgeführt sein. Das jeweilige Segment oder ein weiteres Segment kann als Förderband ausgebildet sein. Ein Segment kann weiter als Spindelantrieb ausgestaltet sein.

Der jeweilige Läufer dient zur Aufnahme des Gutes oder des Werkstücks. Der Läufer ist derart ausgestaltet, dass der Läufer auf dem Segment bewegt werden kann. Ist eines der Segmente ein Stator eines Linearmotors, so weist der Läufer beispielhaft an seiner Unterseite Permanentmagnete auf, so dass das Magnetfeld, das vom Segment ausgeht, eine Bewegung des Läufers induzieren kann. Ein solcher Läufer kann auch von einem Förderband bewegt werden. Bei Bedarf kann der Läufer auch Rollen zur geradlinigen Bewegung umfassen.

Der Läufer weist das Detektionselement auf. Als Detektionselement dient beispielhaft ein Magnetelement, insbesondere ein Permanentmagnet. Das Detektionselement kann auch als Leuchtmittel, insbesondere als LED, als Laserdiode, oder als Zeiger ausgebildet sein. Anhand der Art des Detektionselements ist der Sensor ausgebildet. Der Sensor dient zur Bestimmung der Position des Detektionselements und somit zur Bestimmung der Position des Läufers.

Unter einer Abweichung wird verstanden, wie weit das Detektionselement von der Position bzw. der Stelle, an der das Detektionselement vorgesehen ist, abweicht. Weiter wird unter der Abweichung verstanden, wie weit das Detektionselement von der vorgesehenen Ausrichtung abweicht.

Der Sensor ist abhängig von der Art des Detektionselements beispielhaft gemäß einem Wirkprinzip:
- magnetostriktiv,
- kapazitiv,
- magnetisch,
- optisch,
- induktiv und/oder
- differentialtransformatorisch.

Der Sensor weist in einer bevorzugten Ausgestaltung eine Mehrzahl von Hallsensoren auf, welche nebeneinander, insbesondere entlang einer Linie, angeordnet sind.

In einer weiteren bevorzugten Ausgestaltung ist der Sensor als Magnetostriktionssensor ausgebildet. In den bevorzugten Ausbildungen dient ein Magnetelement, insbesondere ein Permanentmagnet, als Detektionselement.

Unter der Diskrepanz wird verstanden, wie weit der Sensor das Detektionselement von seiner wirklichen Position bzw. Ausrichtung entfernt detektiert. Die Diskrepanz setzt sich insbesondere aus zwei Komponenten, der Nichtlinearität und dem Einbaufehler zusammen.

Eine erste Komponente der Diskrepanz des Sensors ist die Nichtlinearität des Sensors. Unter einer Nichtlinearität wird verstanden, dass die Genauigkeit der Ermittlung der Position eines Detektionselements von der ermittelten Position selbst abhängig ist. Somit weist der Sensor an jeweils zwei Positionen eine unterschiedliche Diskrepanz auf.

Eine zweite Komponente der Diskrepanz des Sensors ist der Einbaufehler. Unter einem Einbaufehler des Sensors wird eine ungenaue Platzierung des Sensors verstanden. Beim Einbaufehler bleibt die Diskrepanz bei unterschiedlichen Positionen konstant.

In Bezug zur Bestimmung der Position eines Läufers bei einem hier beschriebenen Linearantrieb ist unter dem Einbaufehler eine ungenaue Position des Sensors in Bezug zum Segment zu verstehen.

Weiter sind unter der Nichtlinearität des Sensors z.B. Differenzen bei der Position der Sensorelemente zueinander zu verstehen.

Ursachen für eine Diskrepanz sind Ungenauigkeiten bei der Position des Sensors oder einzelner Sensorelemente, wenn der Sensor eine Mehrzahl einzelner Sensorelemente aufweist.

Unter dem ersten Läufer wird insbesondere ein Referenzläufer verstanden. Der Referenzläufer dient als Referenz und definiert die Abweichung von Null. Die Position und Ausrichtung des Detektionselements des ersten Läufers dient jeweils zur Definition der Abweichung der weiteren Läufer. So wird die Stelle/Ausrichtung, an welcher das Detektionselement des jeweiligen weiteren Läufers in Bezug zu der Stelle/Ausrichtung des Detektionselements bestimmt. Die Abweichung von der Stelle/Ausrichtung des Detektionselements des jeweiligen weiteren Läufers im Vergleich zum ersten Läufer wird als Abweichung dem jeweiligen Läufer zugeordnet. Somit weist der erste Läufer eine Abweichung von Null auf und die weiteren Läufer eine Abweichung in Bezug zum ersten Läufer auf.

Zur Bestimmung der Diskrepanz wird der erste Läufer auf dem jeweiligen Segment positioniert und der jeweilige Sensor, der dem jeweiligen Segment zugeordnet ist, bestimmt die Position des Läufers an der jeweiligen Position. Die Position wird vorteilhaft an einer Mehrzahl von unterschiedlichen Stellen bzw. Positionen ermittelt.

Die Diskrepanz des jeweiligen Sensors ist die Differenz der ermittelten Position des ersten Läufers und der wirklichen Position des ersten Läufers auf dem jeweiligen Segment. Die Diskrepanz wird dem Sensor zugeordnet. Die Diskrepanz gibt mit anderen Worten den Messfehler des Sensors an.

Aus der Diskrepanz des jeweiligen Sensors und der Abweichung des jeweiligen Läufers kann durch einfache Addition der Abweichung und der Diskrepanz der Positionsfehler des jeweiligen Läufers auf dem jeweiligen Segment berechnet werden.

Bei der Positionierung und/oder dem Transport des Läufers des Linearantriebs kann der so ermittelte Positionsfehler berücksichtigt werden.

Durch die Ermittlung des Positionsfehlers kann bei Berücksichtigung des Positionsfehlers die Präzision und die Genauigkeit der Positionierung des jeweiligen Läufers erhöht werden.

Vorteilhaft kann der erste Läufer (Referenzläufer) auch als Virtuelle Achse in der Steuereinrichtung ausgebildet sein.

Der erste Läufer entspricht dann einer Virtuellen Achse, wobei das Detektionselement an der vorgesehenen Stelle positioniert ist und in der vorgesehenen Ausrichtung ausgerichtet ist. In der Steuereinrichtung wird die Abweichung vorteilhaft bei der Virtuellen Achse berücksichtigt.

Bei einem Läufer, der als Virtuelle Achse in der Steuereinrichtung abgebildet ist, ist die jeweilige Abweichung vorteilhaft in Form einer Tabelle oder einer Korrekturfunktion bereitgestellt. Vorteilhaft wird die jeweilige Abweichung eines Läufers in der entsprechenden Virtuellen Achse in der Ansteuerung von der jeweiligen Steuereinheit berücksichtigt.

Eine Bestimmung der Diskrepanz des Sensors erfolgt vorteilhaft mit Hilfe eines weiteren Läufers, dessen Abweichung bei der Bestimmung der Diskrepanz berücksichtigt wird.

Mit einem optionalen Verfahrensschritt, nämlich der Korrektur des ermittelten Positionsfehlers, insbesondere mit Hilfe der Steuereinrichtung, wird aus dem Verfahren zur Bestimmung des Positionsfehlers ein Verfahren zur Korrektur des Positionsfehlers.

Gemäß dem weiteren Verfahrensschritt erfolgt eine Korrektur der ermittelten Diskrepanz in einer Recheneinheit des Sensors. Dem Sensor ist hierfür eine Recheneinheit, insbesondere ein Mikrokontroller, zugeordnet. Die Recheneinheit korrigiert die Diskrepanz des Sensors und stellt das Diskrepanz-korrigierte Signal an die Steuereinheit und/oder die Steuereinrichtung bereit.

Mit Hilfe des weiteren Verfahrensschritts kann auch das Verfahren zum Betrieb eines Linearantriebs verbessert werden.

Mit einem bevorzugten Verfahren zur Korrektur des Positionsfehlers von zumindest einem Läufer eines Linearantriebs weist der Linearantrieb ein Segment oder mehrere Segmente auf, wobei zumindest jeweils ein Sensor einem ein Teil der Segmente zugeordnet ist, wobei der Sensor eine Diskrepanz aufweist, wobei der jeweilige Läufer jeweils ein Detektionselement aufweist, wobei das Detektionselement mit einer Abweichung an dem Läufer befestigt ist, wobei das Verfahren zumindest folgende Schritte umfasst:
- Ermittlung der Abweichung des jeweiligen Läufers und Zuordnung der jeweiligen Abweichung zu dem entsprechenden Läufer,
- optional eine Zuordnung der Abweichung zu einer Kennung des jeweiligen Läufers, wobei insbesondere die Kennung dem Läufer zugeordnet wird,
- optional die Zuordnung der jeweiligen Abweichung zu dem entsprechenden Läufer durch Hinterlegung der jeweiligen Abweichung in der Steuereinheit oder in der Steuereinrichtung des Linearantriebs,
- Ermittlung der jeweiligen Diskrepanz des jeweiligen Sensors und Hinterlegung der jeweiligen Diskrepanz in einer Recheneinheit, die dem Sensor zugeordnet ist,
- Überführung der Kennung des jeweiligen Läufers in die Steuereinheit und/oder die Steuereinrichtung,
- Bereitstellung der Position des jeweiligen Läufers für die Steuereinrichtung oder die jeweilige Steuereinheit, wobei die Position bezüglich der Diskrepanz des Sensors korrigiert worden ist,
- Korrektur der Abweichung des jeweiligen Läufers, wobei die Korrektur der Abweichung des jeweiligen insbesondere in der Steuereinrichtung erfolgt,
- Bereitstellung der Positionsfehler-korrigierten Position des jeweiligen Läufers an die Steuereinrichtung und/oder die jeweilige Steuereinheit.

Durch das vorstehend ausgeführte Verfahren ist eine besonders genaue Positionierung des jeweiligen Läufers mit dem Linearantrieb möglich.

Der Linearantrieb weist eine Steuereinrichtung, zumindest ein Segment, einen oder mehrere Läufer sowie zumindest einen Sensor auf, wobei die Steuereinrichtung zur Ausführung eines des vorstehen beschriebenen Verfahrens ausgebildet ist.

Die Steuereinrichtung ist vorteilhaft als Bewegungssteuerung, insbesondere als SPS, ausgebildet. Die Steuereinrichtung kann auch durch weitere Steuereinheiten unterstützt werden, wobei die Steuereinheiten zur Stromversorgung bzw. Spannungsversorgung der Segmente dienen. Die Steuereinheiten können hierbei als Stromrichter bzw. als Frequenzumrichter ausgebildet sein. Die Steuereinrichtung gibt vorteilhaft den Bewegungsablauf vor, wobei der Bewegungsablauf angibt, wie die Läufer durch die Segmente bewegt werden.

Der Bewegungsablauf kann anhand virtueller Achsen ermittelt werden. Die jeweilige Virtuelle Achse beschreibt auf einer Software-Ebene die Bewegung des jeweiligen Läufers. Das Prinzip der virtuellen Achse in Bezug zu einem Linearantrieb ist beispielhaft in der EP-Anmeldung Nr. 16161433.4 beschrieben. Die Virtuelle Achse kann um die Abweichung des entsprechenden weiteren Läufers korrigiert sein.

In einer vorteilhaften Ausgestaltung des Verfahrens zur Ermittlung des Positionsfehlers wird anhand der Diskrepanz des jeweiligen Sensors eine um die Diskrepanz korrigierte Position des jeweiligen Läufers bereitgestellt.

Die Diskrepanz des jeweiligen Sensors kann in einem, dem Sensor zugeordneten Speicher abgelegt sein. Die Diskrepanz kann in einer Recheneinheit, insbesondere einem Mikrocontroller, die jeweils dem Sensor zugeordnet ist, von der ermittelten Position korrigiert werden. Durch diese Ausgestaltung wird die jeweilige Diskrepanz des Sensors korrigiert und die Diskrepanz-korrigierte Position des Läufers durch den Sensor oder durch die jeweilige zugeordnete Recheneinheit bereitgestellt.

Durch die Korrektur der bereitgestellten Position kann eine Korrektur der Diskrepanz in der Steuereinrichtung des Linearantriebs entfallen. Durch diese Ausgestaltung kann auch eine Steuereinrichtung ohne Diskrepanz-Korrektur zum Einsatz kommen.

In einer weiteren vorteilhaften Ausgestaltung des Verfahrens zur Ermittlung des Positionsfehlers wird anhand der jeweiligen Abweichung des jeweiligen weiteren Läufers ein um die Abweichung korrigierte Position des jeweiligen Läufers bereitgestellt.

Die Bereitstellung der Position des jeweiligen (weiteren) Läufers wird vorteilhaft die Position durch die Abweichung korrigiert. Die Korrektur der Abweichung erfolgt vorzugweise in der Steuereinheit. Somit entfällt bei der Erstellung des Bewegungsablaufs, insbesondere mit Hilfe der Steuereinrichtung, die Beachtung der jeweiligen Abweichung des jeweiligen Läufers.

Die um die Abweichung des jeweiligen weiteren Läufers kann auch Grundlage für eine Regelung der Position des Läufers bilden.

In einer weiteren vorteilhaften Ausgestaltung des Verfahrens zur Ermittlung des Positionsfehlers erfolgt die Bestimmung der jeweiligen Diskrepanz nach einer Anordnung der Segmente gemäß einem ersten Diskrepanz-Messverfahren, wobei das erste Diskrepanz-Messverfahren zumindest folgende Schritte umfasst:
- Positionierung des ersten Läufers auf dem jeweiligen Segment gemäß einem vorgegebenen Bewegungsablauf, insbesondere zu festgelegten Stellen bzw. Positionen auf dem Segment,
- Ermittlung der jeweiligen Position des jeweiligen Läufers mit Hilfe des zumindest einen Sensors,
- Vergleich der ermittelten Position mit einer, durch den Bewegungsablauf vorgegebenen Bewegung, vorgegebenen Position des ersten Läufers,
- Bestimmung der Diskrepanz des zumindest einen Sensors aus dem Vergleich.

Das (erste) Diskrepanz-Messverfahren erfolgt vorteilhaft nach einem Zusammenbau des Linearantriebs, insbesondere falls der Linearantrieb eine Mehrzahl von Sensoren aufweist.

Die Steuereinrichtung gibt vorteilhaft den Bewegungsablauf vor. Anhand des Bewegungsablaufs wird die jeweilige Position des Läufers vorgegeben. Die Position des Läufers, insbesondere des ersten Läufers, wird mit Hilfe des jeweiligen Sensors bestimmt. Vorteilhaft wird die Position an einer Vielzahl von Stellen bzw. Positionen auf dem jeweiligen Segment bestimmt. Die ermittelte Position des jeweiligen Läufers wird um die Abweichung des jeweiligen Läufers korrigiert. Die Diskrepanz der jeweilig ermittelten Position wird durch den Vergleich der vorgegebenen und der ermittelten Position bestimmt.

Das vorstehend beschriebene Verfahren eignet sich besonders bei der Inbetriebnahme eines Linearantriebs. Das vorstehend beschriebene Verfahren dient vorteilhaft zur Ermittlung der Diskrepanzen durch z. B. einen Versatz der Sensoren zueinander. Der Versatz der Sensoren zueinander wird durch die Diskrepanz des jeweiligen Sensors berücksichtigt und/oder korrigiert.

In einer weiteren vorteilhaften Ausgestaltung des Verfahrens zur Ermittlung des Positionsfehlers erfolgt das Verfahren zur Bestimmung der Diskrepanz des zumindest einen Sensors anhand eines zweiten Diskrepanz-Messverfahrens, wobei das zweite Diskrepanz-Messverfahren folgende Schritte aufweist:
- Bewegung des ersten Läufers mit Hilfe eines Referenzsystems, wobei das Referenzsystem den ersten Läufer gemäß einem vorgegebenen Bewegungsablauf an einer jeweils vorgegebenen Position positioniert,
- Ermittlung der Position des ersten Läufers mit dem zumindest einen Sensor,
- Vergleich der ermittelten Position des Läufers und der vorgegebenen Position des Läufers,
- Bestimmung der Diskrepanz des zumindest einen Sensors anhand des Vergleiches.

Als Referenzsystem eignet z. B. eine Vorrichtung, bei der ein Läufer, insbesondere der erste Läufer, oder ein Detektionselement auf vorgegebenen Positionen bzw. Stellen auf dem jeweiligen Segment positioniert werden. Als Referenzsystem eignet sich auch ein Läufer, der unabhängig von dem Linearantrieb einen Läufer, insbesondere einen ersten Läufer, auf einer Vielzahl von vorgegebenen Positionen positioniert.

Im Unterschied zum vorherigen Verfahren ist das Referenzsystem unabhängig von dem Linearantrieb und dessen Bestandteilen.

Die beiden vorstehend ausgeführten Ausgestaltungen des Verfahrens dienen vorteilhaft zur Erhöhung der Genauigkeit der Bewegung der Bewegung bzw. der Positionierung der Läufer des Linearantriebs. Vorteilhaft können die beiden vorstehend ausgeführten Ausgestaltungen des Verfahrens bei der Einrichtung eines neu aufgebauten Linearantriebs schnell eine hohe Genauigkeit bei der Positionierung bzw. Bewegung des Linearantriebs gewährleisten.

In einer weiteren vorteilhaften Ausgestaltung des Verfahrens zur Ermittlung des Positionsfehlers wird zumindest dem zumindest einen weiteren Läufern jeweils eine Kennung zugewiesen.

Eine Kennung kann eine Nummer des Läufers aufweisen und somit eine Adressierung des Läufers im Linearantrieb ermöglichen. Die Kennung kann auch die Abweichung des jeweiligen Läufers aufweisen. Die Kennung ist vorteilhaft dem jeweiligen Läufers zugeordnet.

In einer vorteilhaften Ausgestaltung eines solchen Läufers weist der Läufer jeweils ein Speicherelement oder einen lesbaren Code auf. Das Speicherelement kann als RFID-Chip ausgebildet sein. Das Speicherelement wird an dem Läufer befestigt. Das Speicherelement ist vorteilhaft derart ausgestaltet, dass berührungslos mit einer Kennung beschrieben und/ oder die Kennung ausgelesen werden kann. Das Auslesen der Kennung und/oder des Speicherelements erfolgt durch einen Detektor. Die Kennung oder der ausgelesene Inhalt des jeweiligen Speicherelements wird für die Steuereinrichtung und/oder der jeweiligen Steuereinheit bereitgestellt.

Vorteilhaft wird die jeweilige Kennung des Läufers von einem Leseelement, welches dem Sensor und/oder dem Segment zugeordnet ist, ausgelesen. Die Kennung kann der Steuereinrichtung und/oder der, dem jeweiligen Sensor zugeordneten, Recheneinheit bereitgestellt werden.

Die bereitgestellte Kennung kann die Ermittlung sowie die Korrektur des Positionsfehlers vereinfachen.

In einer weiteren vorteilhaften Ausgestaltung des Verfahrens zur Ermittlung des Positionsfehlers erfolgt die Bewegung des jeweiligen Läufers jeweils anhand einer virtuellen Achse, wobei die Abweichung des jeweiligen Läufers der jeweiligen virtuellen Achse zugeordnet wird.

Die Bewegung des jeweiligen Läufers erfolgt anhand eines Bewegungsablaufs. Der Bewegungsablauf kann durch die Steuereinrichtung vorgegeben werden. Die Steuereinrichtung bedient sich zur Beschreibung des Bewegungsablaufs bei dieser Ausführung des Prinzips der Virtuellen Achsen. Eine Virtuelle Achse beschreibt die Bewegung des jeweiligen Läufers. Bei der Bestimmung des Bewegungsablaufs wird die Virtuelle Achse gemäß der Abweichung des jeweiligen Läufers korrigiert.

Unter einer Virtuellen Achse wird die Bewegung des Läufers, welcher der Virtuellen Achse entspricht, beschrieben. Eine Virtuelle Achse bildet mit anderen Worten die Bewegung des entsprechenden Läufers in der Steuereinrichtung wieder.

Bei einer Veränderung des Bewegungsablaufs wird vorteilhaft die Kennung, insbesondere die Abweichung, des jeweiligen Läufers ermittelt. Die Abweichung des jeweiligen Läufers wird in diesem Fall der entsprechenden Virtuellen Achse bereitgestellt. Die Virtuelle Achse wird vorteilhaft anhand der Abweichung des entsprechenden Läufers korrigiert.

In einer weiteren vorteilhaften Ausgestaltung des Verfahrens zur Ermittlung des Positionsfehlers ist jeweils ein Sensor jeweils einem Segment zugeordnet.

Vorteilhaft ist bei dieser Ausgestaltung der Sensor an dem jeweiligen Segment befestigt. Das jeweilige Segment weist dann optional noch die Recheneinheit auf, wobei die Recheneinheit dem Sensor zugeordnet ist. So kann das Segment mit Sensor und optionaler Recheneinheit als eine Einheit dienen.

Durch die Ausgestaltung können die Segmente beim Aufbau des Linearantriebs in einfacher Art und Weise kombiniert werden, ohne das auf die Bedürfnisse eines Sensors Rücksicht nehmen zu müssen.

In einer weiteren vorteilhaften Ausgestaltung des Verfahrens zur Ermittlung des Positionsfehlers ermittelt zumindest ein Sensor die jeweilige Position des zumindest einen Läufers über mehrere Segmente hinweg.

Durch die Ermittlung der Position des jeweiligen Läufers durch einen Sensor, der über eine Mehrzahl von Segmenten ausgebildet ist, können Diskrepanzen beim Übergang der Läufer von einem Segment zu einem weiteren Segment vermindert werden. Ein solcher Sensor kann auf dem Prinzip der Magnetostriktion basieren. Ein solcher Sensor kann auch ein Array aus Lichtdetektoren oder Hallsensoren sein.

Vorteilhaft weist ein Sensor lediglich eine Diskrepanz auf, wobei lediglich eine Diskrepanz bei der Ermittlung des Positionsfehlers berücksichtigt werden muss.

Bei einer weiteren vorteilhaften Ausgestaltung des Verfahrens zur Ermittlung des Positionsfehlers wird der Positionsfehler in einer Wertetabelle oder einer Korrekturfunktion der Steuereinrichtung bereitgestellt.

Die Wertetabelle kann in der Recheneinheit, die dem Sensor zugeordnet ist, der Steuereinheit und/oder der Steuereinrichtung zur Verfügung stehen. Vorteilhaft beinhaltet die Wertetabelle und/oder die Korrekturfunktion auch die Abweichung des jeweiligen Läufers sowie optional die Diskrepanz des jeweiligen Sensors.

Mit Hilfe der Wertetabelle oder der Korrekturfunktion wird der Positionsfehler des jeweiligen Läufers korrigiert. Die Korrektur findet vorteilhaft in der Steuereinrichtung statt. Vorteilhaft bestimmt die Steuereinrichtung eine um die Positionsfehler korrigierten Bewegungsablauf. Anhand des korrigierten Bewegungsablaufs werden, insbesondere mit Hilfe der Steuereinheiten, die Läufer durch die Segmente bewegt bzw. positioniert.

Durch die vorstehend beschriebene Ausführung kann eine besonders genaue Positionierung des Läufers durch den Linearantrieb erfolgen.

Bei dem zur Lösung der oben genannten Aufgabe geeigneten Verfahren zum Betrieb eines Linearantriebs wird den jeweiligen Läufer ein Bewegungsablauf, insbesondere jeweils als Virtuelle Achse, zugeordnet, wobei der Bewegungsablauf des jeweiligen Läufers um dessen ermittelten Positionsfehlers gemäß einem Verfahren nach einem der Ansprüche 1 bis 10 korrigiert wird.

Im Betrieb des Linearantriebs wird vorteilhaft der Positionsfehler am Anfang bestimmt. Nach der Bestimmung der Positionsfehler wird der Positionsfehler als Kombination von Abweichung des jeweiligen Läufers und Diskrepanz des jeweiligen Sensors bei der Bestimmung des Bewegungsablaufs berücksichtigt.

Für eine gleichbleibend hohe Genauigkeit der Positionierung des jeweiligen Läufers des Linearantriebs erfolgt eine hier beschriebene Ermittlung des Positionsfehlers in zeitlich regelmäßigen Abschnitten.

Bei der zur Lösung der oben genannten Aufgabe geeignete Linearantrieb weist eine Steuereinrichtung, zumindest ein Segment, einen oder mehrere Läufer sowie zumindest einen Sensor auf, wobei die Steuereinrichtung zur Ausführung eines Verfahrens nach einem der Ansprüche 1 bis 13 ausgebildet ist.

Bei dem Verfahren zum Betrieb eines Linearantriebs umfasst der Linearantrieb zumindest ein Segment, weitere Läufer, zumindest eine Steuereinheit, Sensoren und optional eine Steuereinrichtung,
- wobei die weiteren Läufer auf den Segmenten positioniert werden,
- wobei die jeweilige Steuereinheit die Position der weiteren Läufer steuert und/oder regelt,
- wobei der jeweilige Sensor die Position und/oder die Geschwindigkeit des jeweiligen Läufers auf dem jeweiligen Segment ermittelt,
- wobei eine Korrektur des Positionsfehlers der Position des jeweiligen Läufers nach einem Verfahren nach Anspruch 11 erfolgt,
- wobei die jeweilig korrigierte Position des jeweiligen weiteren Läufers in der Steuereinheit und/oder in der Steuereinrichtung zur Steuerung bzw. Regelung der Positionierung des jeweiligen weiteren Läufers auf dem jeweiligen Segment dient.

Als Linearantrieb kann ein Linearmotor mit einem Läufer oder mehreren Läufern (jeweils als Sekundärteil des Linearmotors ausgebildet), ein Förderband, eine Kombination aus zumindest einem Linearmotor und zumindest einem Förderband dienen. Ein hier beschriebener Linearantrieb ist vorteilhaft Teil einer Anlage.

Zur Lösung der oben genannten Aufgabe geeignete Anlage weist die Anlage einen vorstehend beschriebenen Linearantrieb auf. Die Anlage ist vorteilhaft als Werkzeugmaschine, als Produktionsmaschine, als Verpackungsmaschine, als Abfüllanlage oder als Transporteinrichtung ausgebildet.

Im Folgenden wird die Erfindung durch Figuren näher beschrieben und erläutert. Es zeigen:
- FIG 1: einen Linearantrieb,
- FIG 2: ein Verfahren,
- FIG 3: einen Linearantrieb,
- FIG 4: ein Sensor,
- FIG 5: die Abweichung eines Detektionselements,
- FIG 6: ein Verfahren zur Korrektur des Positionsfehlers sowie
- FIG 7: ein weiteres Verfahren zur Korrektur des Positionsfehlers.

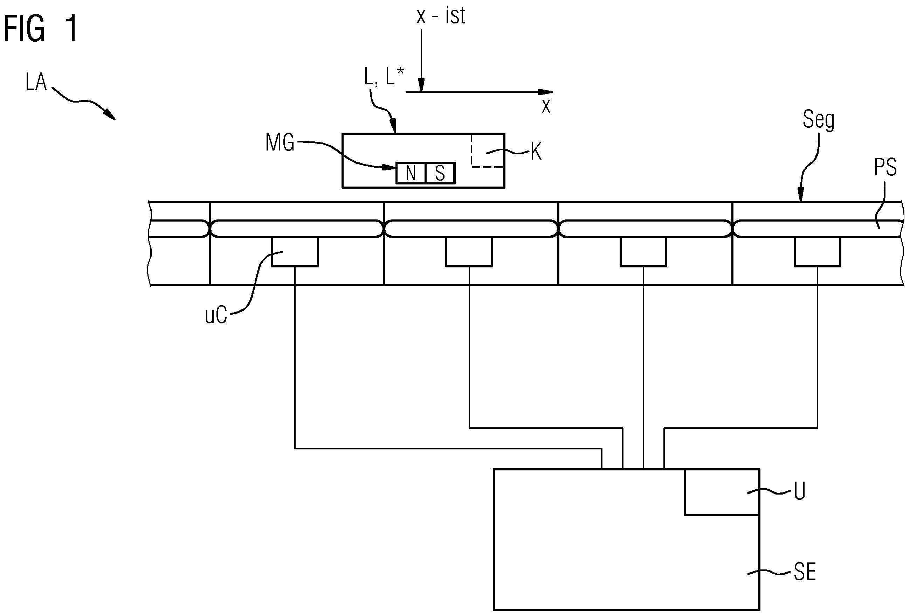

**FIG 1** zeigt einen Linearantrieb LA. Der Linearantrieb weist Segmente Seg auf, wobei die Segmente Seg aneinander zu einer Reihe angeordnet sind. Die hier gezeigten Segmente Seg sind als Linearmotorstatoren (=Primärelemente des Linearmotors) ausgestaltet. Zumindest ein Segment Seg kann auch als Förderband ausgebildet sein.

Auf den Segmenten ist ein Läufer L positioniert. Bei dem Läufer kann es sich um einen ersten Läufer L* (auch als Referenzläufer bezeichnet) oder um einen weiteren Läufer L handeln. Der Läufer weist ein Detektionselement MG auf. Das Detektionselement MG ist hier als Permanentmagnet ausgebildet. Der Läufer L, L* wird in eine Richtung x auf dem jeweiligen Segment Seg bewegt. Der Läufer L, L* befindet sich an einer Position x-ist. Der Sensor weist weiter eine Kennung K auf. Die Kennung K kann eine Adresse des Läufers und/oder die Abweichung des Läufers L, L* umfassen.

Der jeweilige Sensor und/oder die jeweilige Recheneinheit uC ist mit einer Steuereinrichtung SE verbunden. Zur Verbindung der Steuereinheit SE und dem jeweiligen Sensor und/oder der jeweiligen Recheneinheit uC dient eine Signalverbindung. Die Signalverbindung kann bidirektional ausgeführt sein. Die Signalverbindung ist beispielsweise als Netzwerkverbindung ausgeführt.

Die Steuereinrichtung SE kann mit einer oder mehreren Steuereinheiten U verbunden sein oder diese aufweisen. Die Steuereinheiten U weisen Stromrichter einen auf und sind zur Stromversorgung bzw. Spannungsversorgung zumindest eines Segments Seg ausgeführt.

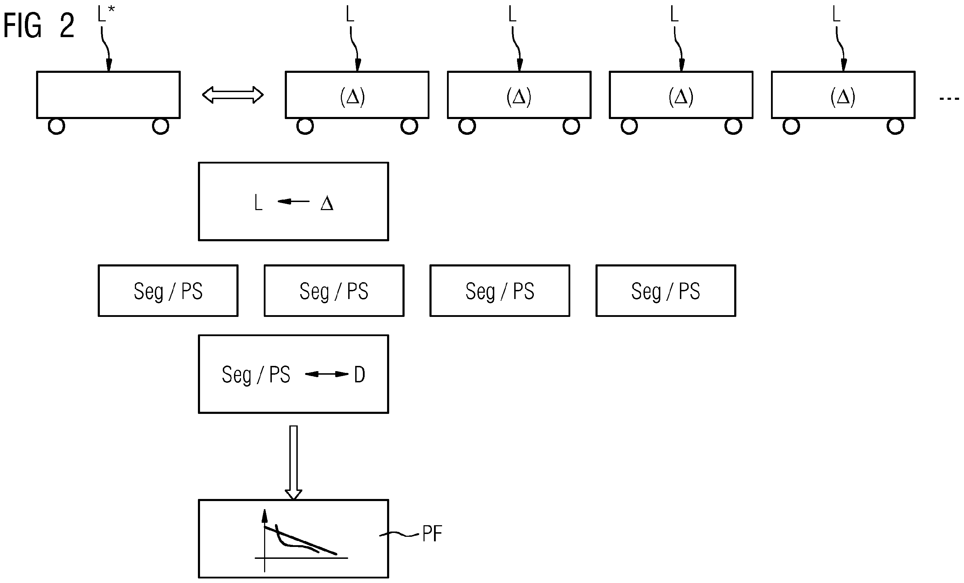

**FIG 2** zeigt ein Verfahren. In einem ersten Verfahrensschritt werden Abweichungen Δ bestimmt. Hierzu werden die jeweiligen Stellen und/oder Ausrichtungen des Detektionselements MG hier bestimmt. Die Abweichung Δ wird durch ein Vergleich des jeweiligen weiteren Läufers L mit einem ersten Läufer L* vergleichen. Der erste Läufer L* wird auch als Referenzläufer bezeichnet.

In einem zweiten Verfahrensschritt wird die jeweilige Abweichung dem entsprechenden Läufer zugeordnet. Die Zuordnung erfolgt beispielsweise durch die Speicherung der jeweiligen Abweichung Δ auf der Kennung K des jeweiligen Läufers.

In einem dritten Verfahrensschritt wird die Diskrepanz D des jeweiligen Sensors PS ermittelt. In dem gezeigten Beispiel ist ein Sensor PS jeweils einem Segment Seg zugeordnet. Somit wird eine Diskrepanz D dem Sensor des jeweiligen Segments Seg zugeordnet.

In einem weiteren Verfahrensschritt wird die Diskrepanz D des jeweiligen Sensors PS und die Abweichung Δ des jeweiligen Läufers L zu einem Positionsfehler PF verknüpft. Zur Verknüpfung der Abweichung Δ und der Diskrepanz D dient im einfachen Fall eine einfache Addition (D+Δ=PF).

Der Positionsfehler PF kann als Wertetabelle und/oder als Funktion der Steuereinrichtung SE oder der jeweiligen Steuereinheit U bereitgestellt werden. Der Positionsfehler PF erfolgt vorteilhaft bei der Inbetriebsetzung des Linearantrieb LA.

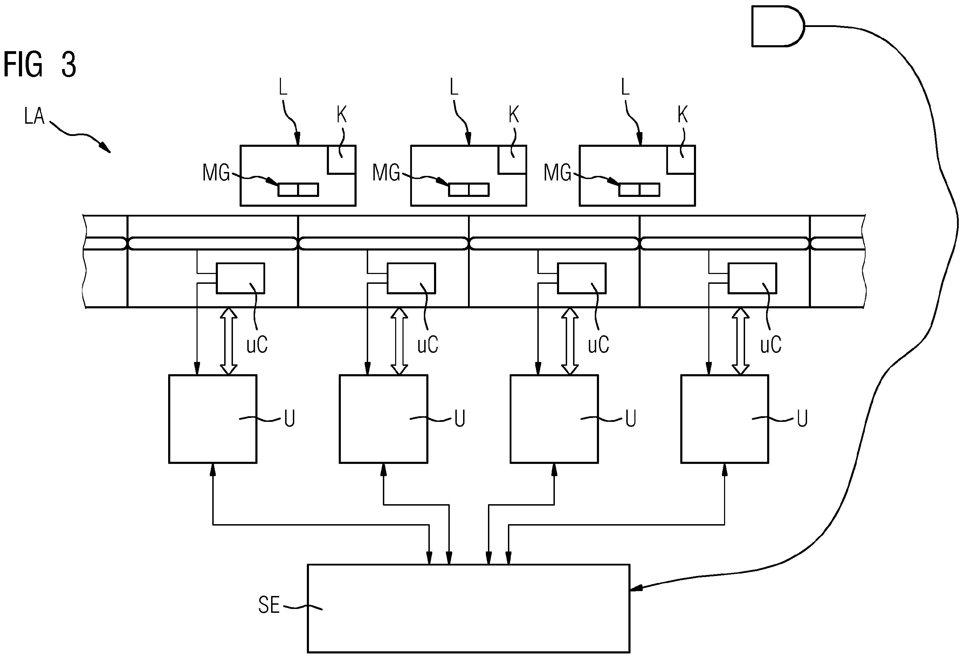

**FIG 3** zeigt einen Linearantrieb LA. Der Linearantrieb weist analog des Linearantriebs aus FIG 1 Segmente Seg und jeweils den Segmenten Seg zugeordnete Sensoren PS auf. Gezeigt sind weiter eine Mehrzahl von Läufern L, die auf den Segmenten Seg positioniert sind. Die Läufer L weisen jeweils eine Kennung K auf. Die Läufer L weisen weiter jeweils ein Detektionselement MG auf. Das Detektionselement MD kann als Permanentmagnet oder als Leuchtmittel ausgeführt sein. Zur Kommunikation der Steuereinrichtung SE mit den Läufern L weist der Linearantrieb ein Element zum Zuspielen und/oder Abrufen der jeweiligen Kennung K des jeweiligen Läufers L auf.

Bei dem gezeigten Linearantrieb LA ist das Segment Seg jeweils einer Steuereinheit U zugeordnet. Die Steuereinheit U dient zur Stromversorgung bzw. Spannungsversorgung des Segments. Weiter dient die Steuereinheit U jeweils zur Aufnahme der Position x-ist des jeweiligen Läufers L oder der jeweiligen Läufer L auf dem Segment Seg.

Die Steuereinheiten U sind jeweils mit der Steuereinrichtung SE durch eine, vorzugsweise bidirektional ausgeführte, Signalverbindung. Die Signalverbindung dient zur Steuerung der Bewegung der Läufer L durch das jeweilige Segment Seg über die jeweilige Steuereinheit U.

Zur Auslesung der Kennung der Läufer L, L* dient ein Kennungserfassung D. Mit der Kennungserfassung wird die Abweichung Δ, die dem Läufer in der Kennung zugeordnet wird, der Steuereinrichtung SE und/oder der jeweiligen Steuereinheit U zugeführt.

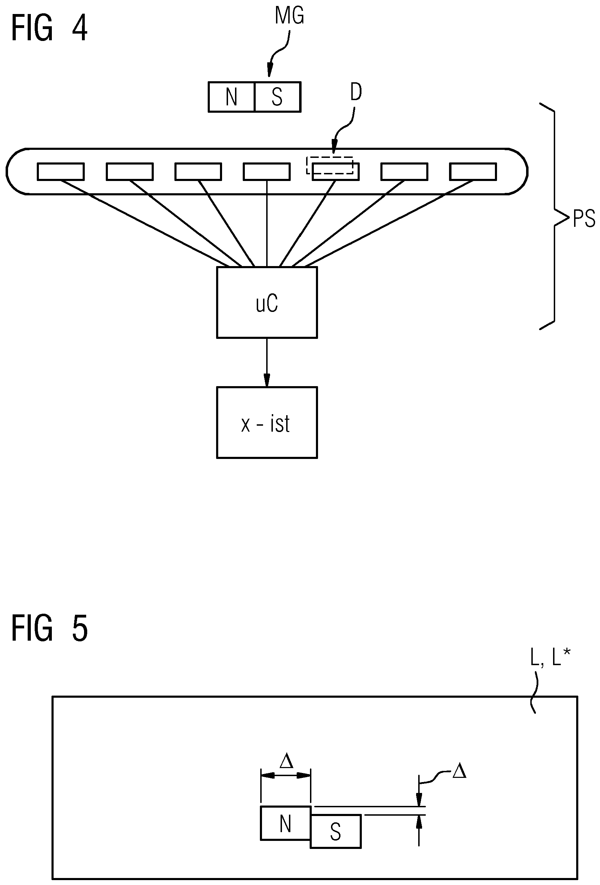

**FIG 4** zeigt einen Sensor PS. Der Sensor PS weist eine Mehrzahl von Sensorelementen, hier z. B. Hall-Sensorelemente auf. Die Sensorelemente registrieren die Position x-ist des Detektionselements MG. Das Detektionselement MG ist als Permanentmagnet ausgeführt. Die jeweiligen Sensorelemente sind beabstandet montiert.

Eine Diskrepanz des Sensors PS tritt dann auf, denn ein Sensorelement nicht genau an der vorgesehenen Stelle montiert ist. Die Sensorelemente sind jeweils mit der Recheneinheit uC verbunden. Die Recheneinheit uC dient zur Kombination der Signale der Sensorelemente. Die Recheneinheit uC stellt die Position des Detektionselements MG und damit des jeweiligen Läufers L, L* aus den Signalen der Sensorelemente zusammen.

**FIG 5** zeigt die Abweichung Δ. Die Abweichung Δ ist die Differenz der Stelle und der Ausrichtung, an - bzw. in der sich das Detektionselement MG befindet und der vorgesehenen Stelle bzw. Ausrichtung des Detektionselements MG (absolute Abweichung). Die Abweichung kann auch in Bezug zur Stelle und/oder Ausrichtung des Detektionselements MG des ersten Läufers L* (des Referenzläufers) ermittelt werden (relative Abweichung).

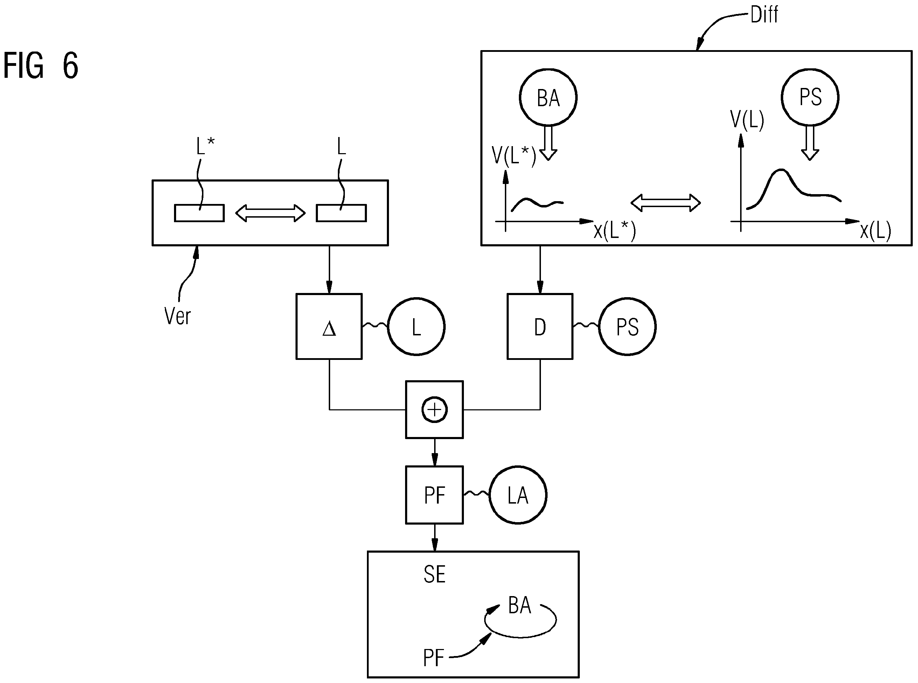

**FIG 6** zeigt ein Verfahren zur Korrektur des Positionsfehlers PF. Der Positionsfehler PF setzt sich aus der Abweichung Δ und der Diskrepanz D zusammen. Die Abweichung Δ wird bei dem Vergleich Ver der Stelle und der Ausrichtung des Detektionselements MG des jeweiligen weiteren Läufers L mit dem ersten Läufer L* bestimmt.

Die Diskrepanz D wird in einem Vergleich Diff zwischen der Bewegung des ersten Läufers gemäß einem Bewegungsablauf BA und der, mit Hilfe des Sensors PS ermittelte Bewegung bestimmt. Hierzu wird eine Bewegung des ersten Läufers L* durch den Bewegungsablauf BA vorgegeben. Vorteilhaft wird die Geschwindigkeit v(L*) in Abhängigkeit von der Position x-ist in die Bewegungsrichtung x(L*) des Läufers L* durch den Bewegungsablauf vorgegeben. Mit dem Sensor PS wird dann die Geschwindigkeit v(L*) und/oder die Position x-ist des ersten Läufers L* ermittelt. Aus einem Vergleich der Positionen des Läufers L* gemäß dem Bewegungsablauf BA und der ermittelten Position x-ist wird die Diskrepanz D ermittelt. Die Diskrepanz D wird dem jeweiligen Sensor zugeordnet.

Zur Bestimmung der Abweichung Δ des jeweils weiteren Läufers L wird die Stelle und/oder Ausrichtung, an welcher das Detektionselement MG jeweils befestigt ist, mit der Stelle/Ausrichtung des Detektionselements MG des ersten Läufers L* vergleichen. Somit wird für den jeweiligen weiteren Läufer L eine Abweichung ermittelt und die jeweilige Abweichung des jeweiligen Läufer L zugeordnet.

Aus der Diskrepanz D, die dem jeweiligen Sensor PS zugeordnet ist, und der Abweichung Δ, die dem jeweiligen weiteren Läufer L zugeordnet ist, wird durch eine Verknüpfung, insbesondere durch eine (direkte) Addition der Positionsfehler PF ermittelt. Der Positionsfehler PF wird dem Linearantrieb LA zugeordnet.

Der Positionsfehler wird der Steuereinrichtung SE des Linearantriebs LA zur Verfügung gestellt. Die Steuereinrichtung SE korrigiert anhand des Positionsfehlers PF den Bewegungsablauf BA.

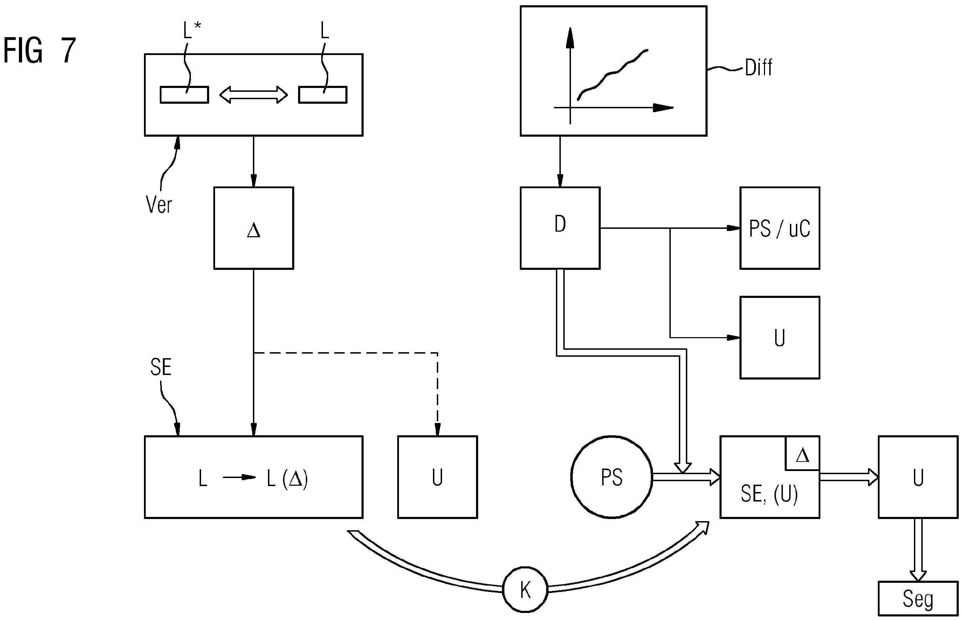

**FIG 7** zeigt ein weiteres Verfahren zur Korrektur des Positionsfehlers PF. Bei dem Verfahren wird in einem ersten Schritt mit Hilfe eines Vergleichs Ver die Abweichung Δ bestimmt und dem jeweiligen weiteren Läufer L die jeweilige Abweichung Δ zugeordnet. Wie oben angedeutet erfolgt die Vergleich Ver zur Bestimmung der jeweiligen Abweichung des jeweiligen weiteren Läufers durch einen Vergleich der Positionen des jeweiligen Detektionselements MG des jeweils weiteren Läufers L mit der Position des Detektionselements MG des ersten Läufers. Die Abweichung Δ wird dabei für die Steuereinrichtung SE und/oder die jeweilige Steuereinheit U bereitgestellt.

In einem weiteren Vergleich Diff wird die Diskrepanz D des jeweiligen Sensors bestimmt. Die Diskrepanz D des jeweiligen Sensors PS wird bestimmt, indem der erste Läufer L* auf eine Mehrzahl von vorgegebenen Positionen x-BA positioniert werden. Die jeweiligen vorgegebenen Positionen x-BA werden mit dem Positionen x-ist verglichen, welche mit dem jeweiligen Sensor PS bestimmt werden. Somit wird insbesondere die Nichtlinearität des Sensors PS bestimmt. Die Diskrepanz D des Sensors PS ergibt sich aus dem jeweiligen Differenz von der vorgegebenen Position x-BA und der ermittelten Position x-ist des ersten Läufers L*.

Die Diskrepanz wird vorteilhaft als Wertetabelle oder als Fehlerfunktion für den Sensor PS, insbesondere für eine Recheneinheit uC, welche dem Sensor zugeordnet ist, und/oder der Steuereinheit U bereitgestellt.

Zur Korrektur des Positionsfehlers PF, insbesondere beim Betrieb des Linearantriebs LA, wird die jeweilige Position x-ist des jeweiligen Läufers L, L* mit dem jeweiligen Sensor PS bestimmt. Das Signal des Sensors PS wird entweder in der Steuereinheit U oder mit Hilfe der Recheneinheit, die dem jeweiligen Sensor PS zugeordnet ist, korrigiert. So liegt in der Steuereinheit U eine jeweils Diskrepanz-korrigierte Position i-ist des jeweiligen Läufers L, L* vor.

Der jeweilige Läufer L, L* weist jeweils eine Kennung K auf. Die Kennung K wird detektiert. Vorteilhaft liegt für die Kennung K eine Abweichung Δ des entsprechenden Läufers L, L* vor. Vorzugsweise in der Steuereinrichtung SE wird die Diskrepanz-korrigierte Position anhand der Kennung des jeweiligen Läufers L, L* mit der entsprechenden Abweichung Δ korrigiert. Der Diskrepanz- und Abweichungs-korrigierte Position x-ist entspricht der Positionsfehler-korrigierte Position x-ist des Läufers. Die Positionsfehler-korrigierte Position i-ist entspricht regelmäßig der "wirklichen Position" des jeweiligen Läufers L, L*. Die Positionsfehler-korrigierte Position x-ist des jeweiligen Läufers wird als Eingangsgröße zur Steuerung und/oder Regelung der Bewegung oder Positionierung des jeweiligen Läufers L* für die jeweilige Steuereinheit U bereitgestellt. Anhand der Positionsfehler-korrigierten Position x-ist des jeweiligen Läufers L, L* auf dem jeweiligen Segment Seg erfolgt eine gesteuerte und/oder geregelte Bewegung des jeweiligen Läufers L, L*.

Die jeweils Positionsfehler-korrigiert Position des jeweiligen Läufers L, L* dient zur Eingangswert einer Regelung der Position des jeweiligen Läufers L, L*.

Vorzugsweise wird die Abweichung Δ des jeweiligen weiteren Läufers L als Funktion seiner Kennung K in der Steuereinrichtung SE oder in der jeweiligen Steuereinheit U hinterlegt.

Die Kennung wird vorzugsweise mit einem Detektor ausgelesen und der Steuereinheit U, dem jeweiligen Sensor PS und/oder der Steuereinrichtung SE bereitgestellt.

Zusammenfassend betrifft die Erfindung ein Verfahren zur Ermittlung eines Positionsfehlers PF bei einem Linearantrieb LA, einen Linearantrieb, ein Verfahren zum Betrieb eines solchen Linearantriebs LA und eine Anlage. Zur Bestimmung des Positionsfehlers PF wird die Abweichung Δ des jeweiligen weiteren Läufers L in Bezug zu einem ersten Läufer L* (Referenzläufer L*) ermittelt. Weiter wird anhand der Abweichung Δ des Läufers L die Diskrepanz D des jeweiligen Sensors PS ermittelt. Die Diskrepanz D kann mit einem Referenzsystem ermittelt werden. Anhand der Diskrepanz D des jeweiligen Sensors PS und der Abweichung Δ des jeweiligen Läufers L kann der Positionsfehler ermittelt werden. Der Positionsfehler kann zur verbesserten, insbesondere zur genaueren Positionierung des jeweiligen Läufers L auf dem Linearantrieb LA bzw. der Segmente Seg dienen.

## Patentansprüche

1. Verfahren zur Ermittlung eines Positionsfehlers (PF) für einen Linearantrieb (LA), wobei der Linearantrieb (LA) Läufer (L*, L), zumindest ein Segment (Seg), zumindest einen Sensor (PS) und eine Steuereinrichtung (SE) umfasst, wobei der jeweilige Läufer (L*, L) ein Detektionselement (MG) aufweist, wobei die jeweilige Position (x-ist) des jeweiligen Läufers (L) anhand des Detektionselements (MG) durch zumindest einen Sensor (PS) ermittelt wird, wobei das Verfahren zumindest folgende Schritte umfasst:
- Bestimmung der jeweiligen Position und/oder Ausrichtung des Detektionselements (MG) eines ersten Läufers (L*) und weiterer Läufer (L),
- Vergleich (Ver) der jeweiligen Position und/oder der Ausrichtung des Detektionselements (MG) der jeweiligen weiteren Läufer (L) mit der Position und/oder Ausrichtung des jeweiligen Detektionselements (MG) des ersten Läufers (L*) zur Bestimmung von Abweichungen (Δ) zwischen der jeweiligen Position und/oder der jeweiligen Ausrichtung des Detektionselements (MG) der jeweiligen weiteren Läufers (L) und der Position und/oder Ausrichtung des Detektionselements (MG) des ersten Läufers (L*),
- Zuordnung der jeweiligen Abweichung (Δ) dem jeweils weiteren Läufer (L),
- Bestimmung einer Diskrepanz (D) des jeweiligen Sensors (PS) mit Hilfe des ersten Läufers (L*), wobei die Diskrepanz (D) angibt, wie weit der jeweilige Sensor (PS) das jeweilige Detektionselement (MG) von seiner wirklichen Position bzw. Ausrichtung entfernt detektiert, und wobei sich die Diskrepanz (D) aus einer Nichtlinearität und einem Einbaufehler zusammensetzt,
- Zuordnung der jeweiligen Diskrepanz (D) zu dem jeweiligen Sensor (PS),
- Bestimmung des Positionsfehlers (PF) des jeweiligen Läufers (L, L*) durch Verknüpfung der Abweichung (Δ) des jeweiligen weiteren Läufers (L) und der Diskrepanz (D) des Sensors.

2. Verfahren nach Anspruch 1, wobei anhand der Diskrepanz (D) des jeweiligen Sensors (PS) eine um die Diskrepanz (D) korrigierte Position (x-ist) des jeweiligen Läufers (L, L*) bereitgestellt wird.

3. Verfahren nach Anspruch 1 oder 2, wobei eine anhand der jeweiligen Abweichung (Δ) des jeweiligen weiteren Läufers (L) ein um die Abweichung (Δ) korrigierte Position des Läufers (L) bereitgestellt wird.

4. Verfahren nach einem der Ansprüche 1 bis 3, wobei die Bestimmung der jeweiligen Diskrepanz (D) nach einer Anordnung der Segmente (Seg) gemäß einem ersten Diskrepanz-Bestimmungsverfahren erfolgt, wobei das erste Diskrepanz-Bestimmungsverfahren zumindest folgende Schritte umfasst:
- Positionierung des ersten Läufers (L*) auf dem jeweiligen Segment (Seg) gemäß einem vorgegebenen Bewegungsablauf (BA),
- Ermittlung der jeweiligen Position (x-ist) des jeweiligen Läufers (L) mit Hilfe des zumindest einen Sensors (PS),
- Vergleich (Diff) der ermittelten Position (x-ist) mit einer, durch den Bewegungsablauf (BA) vorgegebenen Position (x-BA) des ersten Läufers (L*),
- Bestimmung der Diskrepanz (D) des zumindest einen Sensors (PS) aus dem Vergleich (Diff).

5. Verfahren nach einem der Ansprüche 1 bis 3, wobei ein Verfahren zur Bestimmung der Diskrepanz (D) des zumindest einen Sensors (PS) anhand eines zweiten Diskrepanz-Messverfahrens erfolgt, wobei das zweite Diskrepanz-Messverfahren folgende Schritte aufweist:
- Bewegung des ersten Läufers (L*) mit Hilfe eines Referenzsystems, wobei das Referenzsystem den ersten Läufer (L*) gemäß einem vorgegebenen Bewegungsablauf (BA) an einer jeweils vorgegebenen Position (x-BA) positioniert,
- Ermittlung der Position (x-ist) des ersten Läufers (L*) mit dem zumindest einen Sensor (PS),
- Vergleich (Diff) der ermittelten Position (x-ist) und der vorgegebenen Position (x-BA)
- Bestimmung der Diskrepanz (D) des zumindest einen Sensors (PS) anhand des Vergleiches (Diff).

6. Verfahren nach einem der vorangehenden Ansprüche, wobei zumindest dem zumindest einen weiteren Läufer (L) jeweils eine Kennung zugewiesen wird.

7. Verfahren nach einem der vorangehenden Ansprüche, wobei die Bewegung des jeweiligen Läufers (L, L*) jeweils anhand einer virtuellen Achse (VA) erfolgt und wobei die Abweichung (Δ) des jeweiligen Läufers (L) der jeweiligen virtuellen Achse (VA) zugeordnet wird.

8. Verfahren nach einem der vorangehenden Ansprüche, wobei jeweils ein Sensor (PS) jeweils einem Segment (Seg) zugeordnet ist.

9. Verfahren nach einem der Ansprüche 1 bis 8, wobei zumindest ein Sensor (PS) die jeweilige Position (x-ist) der Läufer (L, L*) über mehrere Segmente (Seg) hinweg ermittelt.

10. Verfahren nach einem der vorangehenden Ansprüche, wobei die der Positionsfehler (PF) in einer Wertetabelle oder einer Korrekturfunktion der Steuereinrichtung (SE) bereitgestellt wird.

11. Verfahren zur Korrektur eines Positionsfehlers (PF) für einen Linearantrieb (LA), wobei eine Abweichung (Δ) und eine Diskrepanz (D) gemäß einem Verfahren nach einem der Ansprüche 1 bis 10 ermittelt werden,
- wobei die Diskrepanz (D) dem Sensor (PS), insbesondere einer dem jeweiligen Sensor (PS) zugeordneten Recheneinheit (uC) zugeordnet wird,
- wobei der Sensor (PS) eine um die Diskrepanz (D) korrigierte Position (x-ist) des Läufers (L) bereitstellt,
- wobei dem jeweiligen weiteren Läufer (L) jeweils eine Abweichung (Δ) zugeordnet wird,
- wobei die Abweichung (Δ) des jeweils weiteren Läufers (L) bei der Bereitstellung der jeweiligen Position (x-ist) des jeweiligen weiteren Läufers (L*) berücksichtigt wird,
- und wobei die jeweils um die Diskrepanz (D) und die Abweichung (Δ) korrigierte Position (x-ist) des jeweiligen weiteren Läufers (L) einer Steuereinrichtung (SE) und/oder der jeweiligen Steuereinheit (U) bereitgestellt wird.

12. Verfahren zum Betrieb eines Linearantriebs (LA), wobei der Linearantrieb (LA) zumindest ein Segment (Seg), weitere Läufer (L), zumindest eine Steuereinheit (U), Sensoren (PS) und optional eine Steuereinrichtung (SE) umfasst,
- wobei die weiteren Läufer (L) auf den Segmenten (Seg) positioniert werden,
- wobei die jeweilige Steuereinheit (U) die Position (x-ist) der weiteren Läufer (L) steuert und/oder regelt,
- wobei der jeweilige Sensor (PS) die Position (i-ist) und/oder die Geschwindigkeit (v-ist) des jeweiligen Läufers (L) auf dem jeweiligen Segment (Seg) ermittelt,
- wobei eine Korrektur des Positionsfehlers (PF) der Position (x-ist) des jeweiligen Läufers nach einem Verfahren nach Anspruch 11 erfolgt,
- wobei die jeweilig korrigierte Position (x-ist) des jeweiligen weiteren Läufers (L) in der Steuereinheit (U) und/oder der Steuereinrichtung (SE) zur Steuerung bzw. Regelung der Positionierung des jeweiligen weiteren Läufers (L) auf dem jeweiligen Segment (Seg) dient.

13. Verfahren zum Betrieb eines Linearantriebs (LA) insbesondere zur Kompensation eines Positionsfehlers (PF), wobei den jeweiligen Läufer (L, L*) ein Bewegungsablauf (BA), insbesondere als Virtuelle Achse (VA), zugeordnet wird, und wobei der Bewegungsablauf (BA) des jeweiligen Läufers (L, L*) um dessen ermittelten Positionsfehlers (PF) gemäß einem Verfahren nach den Ansprüchen 1 bis 10 ermittelt wird oder nach einem Verfahren nach Anspruch 11 korrigiert wird.

14. Linearantrieb (LA), aufweisend eine Steuereinrichtung (SE), zumindest ein Segment (Seg), einen oder mehrere Läufer (L, L*), zumindest eine Steuereinheit (U) sowie zumindest einen Sensor (PS), wobei die Steuereinrichtung (SE) oder die jeweilige Steuereinheit zur Ausführung eines Verfahrens nach einem der vorangehenden Ansprüche ausgebildet ist.

15. Anlage, insbesondere Produktionsmaschine, Werkzeugmaschine, Verpackungsmaschine oder Abfüllanlage, aufweisend einen Linearantrieb (LA) nach Anspruch 14.

## Claims

1. Method for ascertaining a position error (PF) for a linear drive (LA), wherein the linear drive (LA) comprises runners (L*, L), at least one segment (Seg), at least one sensor (PS) and a control device (SE), wherein the respective runner (L*, L) comprises a detection element (MG), wherein the respective position (x-ist) of the respective runner (L) is ascertained on the basis of the detection element (MG) by means of at least one sensor (PS), wherein the method comprises at least the following steps:
- determining the respective position and/or alignment of the detection element (MG) of a first runner (L*) and of further runners (L),
- comparing (Ver) the respective position and/or the alignment of the detection element (MG) of the respective further runners (L) with the position and/or alignment of the respective detection element (MG) of the first runner (L*) for the purposes of determining deviations (Δ) between the respective position and/or the respective alignment of the detection element (MG) of the respective further runner (L) and the position and/or alignment of the detection element (MG) of the first runner (L*),
- assigning the respective deviation (Δ) to the respective further runner (L),
- determining a discrepancy (D) of the respective sensor (PS) with the aid of the first runner (L*), wherein the discrepancy (D) indicates how far away from its actual position or alignment the respective detection element (MG) is detected by the respective sensor (PS), and wherein the discrepancy (D) is composed of a non-linearity and an installation error,
- assigning the respective discrepancy (D) to the respective sensor (PS),
- determining the position error (PF) of the respective runner (L, L*) by linking the deviation (Δ) of the respective further runner (L) and the discrepancy (D) of the sensor.

2. Method according to Claim 1, wherein a position (x-ist), corrected by the discrepancy (D), of the respective runner (L, L*) is provided on the basis of the discrepancy (D) of the respective sensor (PS).

3. Method according to Claim 1 or 2, wherein a position, corrected by the deviation (Δ), of the runner (L) is provided on the basis of the respective deviation (Δ) of the respective further runner (L).

4. Method according to one of Claims 1 to 3, wherein the respective discrepancy (D) is determined after arranging the segments (Seg) in accordance with a first discrepancy determination method, wherein the first discrepancy determination method comprises at least the following steps:
- positioning the first runner (L*) on the respective segment (Seg) in accordance with a predetermined movement sequence (BA),
- ascertaining the respective position (x-ist) of the respective runner (L) with the aid of the at least one sensor (PS),
- comparing (Diff) the ascertained position (x-ist) with a position (x-BA) of the first runner (L*) predetermined by the movement sequence (BA),
- determining the discrepancy (D) of the at least one sensor (PS) from the comparison (Diff).

5. Method according to one of Claims 1 to 3, wherein a method for determining the discrepancy (D) of the at least one sensor (PS) is carried out on the basis of a second discrepancy measurement method, wherein the second discrepancy measurement method comprises the following steps:
- moving the first runner (L*) with the aid of a reference system, wherein the reference system positions the first runner (L*) in accordance with a predetermined movement sequence (BA) at a respectively predetermined position (x-BA),
- ascertaining the position (x-ist) of the first runner (L*) with the at least one sensor (PS),
- comparing (Diff) the ascertained position (x-ist) and the predetermined position (x-BA),
- determining the discrepancy (D) of the at least one sensor (PS) on the basis of the comparison (Diff).

6. Method according to one of the preceding claims, wherein an identification is assigned in each case to the at least one further runner (L).

7. Method according to one of the preceding claims, wherein the movement of the respective runner (L, L*) is in each case carried out on the basis of a virtual axis (VA) and wherein the deviation (Δ) of the respective runner (L) is assigned to the respective virtual axis (VA).

8. Method according to one of the preceding claims, wherein respectively one sensor (PS) is assigned to a segment (Seg) in each case.

9. Method according to one of Claims 1 to 8, wherein at least one sensor (PS) ascertains the respective position (x-ist) of the runners (L, L*) over a plurality of segments (Seg).

10. Method according to one of the preceding claims, wherein the position error/errors (PF) is provided in a value table or a correction function of the control device (SE).

11. Method for correcting a position error (PF) for a linear drive (LA), wherein a deviation (Δ) and a discrepancy (D) are ascertained in accordance with a method according to one of Claims 1 to 10,
- wherein the discrepancy (D) is assigned to the sensor (PS), in particular to a computing unit (uC) assigned to the respective sensor (PS),
- wherein the sensor (PS) provides a position (x-ist) of the runner (L) corrected by the discrepancy (D),
- wherein a deviation (Δ) is assigned to the respective further runner (L) in each case,
- wherein the deviation (Δ) of the respective further runner (L) is taken into account when providing the respective position (x-ist) of the respective further runner (L*),
- and wherein the position (x-ist) of the respective further runner (L) respectively corrected by the discrepancy (D) and the deviation (Δ) is provided to a control device (SE) and/or the respective control unit (U).

12. Method for operating a linear drive (LA), wherein the linear drive (LA) comprises at least one segment (Seg), further runners (L), at least one control unit (U), sensors (PS) and, optionally, a control device (SE),
- wherein the further runners (L) are positioned on the segments (Seg),
- wherein the respective control unit (U) controls and/or regulates the position (x-ist) of the further runners (L),
- wherein the respective sensor (PS) ascertains the position (i-ist) and/or speed (v-ist) of the respective runner (L) on the respective segment (Seg),
- wherein there is a correction of the position error (PF) of the position (x-ist) of the respective runner according to a method according to Claim 11,
- wherein the respectively corrected position (x-ist) of the respective further runner (L) serves to control or regulate the positioning of the respective further runner (L) on the respective segment (Seg) in the control unit (U) and/or the control device (SE).

13. Method for operating a linear drive (LA), in particular for compensating a position error (PF), wherein a movement sequence (BA), in particular as a virtual axis (VA), is assigned to the respective runners (L, L*) and wherein the movement sequence (BA) of the respective runner (L, L*) about the ascertained position error (PF) thereof is ascertained in accordance with a method according to Claims 1 to 10 or corrected according to a method according to Claim 11.

14. Linear drive (LA) comprising a control device (SE), at least one segment (Seg), one or more runners (L, L*), at least one control unit (U) and at least one sensor (PS), wherein the control device (SE) or the respective control unit is embodied to carry out a method according to one of the preceding claims.

15. Installation, in particular production machine, machine tool, packaging machine or filling installation, comprising a linear drive (LA) according to Claim 14.

## Revendications

1. Procédé de détection d'une erreur de position (PF) pour un entraînement linéaire (LA), l'entraînement linéaire (LA) comprenant des patins (L*, L), au moins un segment (Seg), au moins un capteur (PS) et un dispositif de commande (SE), le patin (L*, L) respectif possédant un élément de détection (MG), la position (x-ist) respective du patin (L) respectif étant détectée à l'aide de l'élément de détection (MG) par au moins un capteur (PS), le procédé comprenant au moins les étapes suivantes:
- détermination de la position respective et/ou orientation de l'élément de détection (MG) d'un premier patin (L*) et d'autres patins (L),
- comparaison (Ver) de la position respective et/ou de l'orientation de l'élément de détection (MG) des autres patins respectifs (L) avec la position et/ou l'orientation de l'élément de détection (MG) respectif du premier patin (L*) pour la détermination de déviations (Δ) entre la position respective et/ou l'orientation respective de l'élément de détection (MG) des autres patins respectifs (L) et de la position et/ou l'orientation de l'élément de détection (MG) du premier patin (L*),
- association de la déviation (Δ) respective à l'autre patin (L) respectif,
- détermination d'une anomalie (D) du capteur (PS) respectif à l'aide du premier patin (L*), l'anomalie (D) indiquant l'étendue à laquelle le capteur (PS) respectif détecte l'éloignement de l'élément de détection (MG) respectif par rapport à sa position réelle resp. son orientation, et l'anomalie (D) se composant d'une absence de linéarité et d'une erreur d'installation,
- association de l'anomalie (D) respective au capteur (PS) respectif,
- détermination de l'erreur de position (PF) du patin (L, L*) respectif par liaison entre la déviation (Δ) de l'autre patin (L) respectif et l'anomalie (D) du capteur.

2. Procédé selon la revendication 1, une position corrigée (x-ist) sur le plan de l'anomalie (D) du patin respectif (L, L*) étant procurée à l'aide de l'anomalie (D) du capteur (PS) respectif.

3. Procédé selon la revendication 1 ou 2, une position corrigée sur le plan de la déviation (Δ), du patin (L), étant procurée à l'aide de la déviation (Δ) respective de l'autre patin (L) respectif.

4. Procédé selon l'une des revendications 1 à 3, la détermination de l'anomalie (D) respective s'effectuant d'après une disposition des segments (Seg) selon un premier procédé de détermination de l'anomalie, ce premier procédé de détermination de l'anomalie comprenant au moins les étapes suivantes:
- positionnement du premier patin (L*) sur le segment (Seg) respectif selon un enchaînement des mouvements (BA) prédéfini,
- détection de la position (x-ist) respective du patin (L) respectif à l'aide du au moins un capteur (PS),
- comparaison (Diff) de la position détectée (x-ist) avec une position (x-BA) du premier patin (L*) prédéfinie par le enchaînement des mouvements (BA),
- détermination de l'anomalie (D) du au moins un capteur (PS) à partir de la comparaison (Diff).

5. Procédé selon l'une des revendications 1 à 3, un procédé de détermination de l'anomalie (D) du au moins un capteur (PS) s'effectuant à l'aide d'un deuxième procédé de mesure de l'anomalie, ce deuxième procédé de mesure de l'anomalie présentant les étapes suivantes:
- mouvement du premier patin (L*) à l'aide d'un système de référence, ce système de référence positionnant le premier patin (L*) selon un enchaînement des mouvements (BA) prédéfini à une position respective prédéfinie (x-BA),
- détection de la position (x-ist) du premier patin (L*) avec le au moins un capteur (PS),
- comparaison (Diff) de la position détectée (x-ist) et de la position prédéfinie (x-BA),
- détermination de l'anomalie (D) du au moins un capteur (PS) à l'aide de la comparaison (Diff).

6. Procédé selon l'une des revendications précédentes, au moins une identification étant chaque fois allouée à au moins un autre patin (L).

7. Procédé selon l'une des revendications précédentes, le mouvement du patin (L, L*) respectif s'effectuant chaque fois à l'aide d'un axe virtuel (VA) et la déviation (Δ) du patin (L) respectif étant associé à l'axe virtuel (VA) respectif.

8. Procédé selon l'une des revendications précédentes, un capteur (PS) respectif étant associé à un segment (Seg) respectif.

9. Procédé selon l'une des revendications 1 à 8, au moins un capteur (PS) détectant la position (x-ist) respective des patins (L, L*) par dessus plusieurs segments (Seg).

10. Procédé selon l'une des revendications précédentes, les erreurs de position (PF) étant présentées dans une table de vérité ou une fonction de correction du dispositif de commande (SE).

11. Procédé de correction d'une erreur de position (PF) pour un entraînement linéaire (LA), une déviation (Δ) et une anomalie (D) étant détectées selon un procédé selon l'une des revendications 1 à 10,
- l'anomalie (D) étant associée au capteur (PS), en particulier à une unité de calcul (uC) associée au capteur (PS) respectif,
- le capteur (PS) procurant une position (x-ist) du patin (L) corrigée sur le plan de l'anomalie (D),
- une déviation (Δ) étant chaque fois associée à l'autre patin (L) respectif,
- la déviation (Δ) de l'autre patin (L) respectif étant prise en compte lors de la fourniture de la position (x-ist) respective de l'autre patin (L*) respectif,
- et la position (x-ist) respective corrigée sur le plan de l'anomalie (D) et de la déviation (Δ) de l'autre patin (L) respectif étant fournie à un dispositif de commande (SE) et/ou à l'unité de commande (U) respective.

12. Procédé de fonctionnement d'un entraînement linéaire (LA), l'entraînement linéaire (LA) comprenant au moins un segment (Seg), d'autres patins (L), au moins une unité de commande (U), des capteurs (PS) et éventuellement un dispositif de commande (SE),
- les autres patins (L) étant positionnés sur les segments (Seg),
- l'unité de commande (U) respective commandant et/ou réglant la position (x-ist) des autres patins (L),
- le capteur respectif (PS) détectant la position (i-ist) et/ou la vitesse (v-ist) du patin (L) respectif sur le segment (Seg) respectif,
- une correction de l'erreur de position (PF) de la position (x-ist) du patin respectif s'effectuant selon un procédé selon la revendication 11
- la position (x-ist) corrigée respective de l'autre patin (L) respectif dans l'unité de commande (U) et/ou le dispositif de commande (SE) servant à la commande resp. au réglage du positionnement de l'autre patin (L) respectif sur le segment (Seg) respectif.

13. Procédé de fonctionnement d'un entraînement linéaire (LA) en particulier destiné au rattrapage d'une erreur de position (PF), un enchaînement des mouvements (BA), en particulier sous la forme d'un axe virtuel (VA) étant associé aux patins (L, L*) respectifs et l'enchaînement des mouvements (BA) du patin respectif (L, L*) étant détecté sur le plan de son erreur détectée de position (PF) selon un procédé selon les revendications 1 à 10 ou étant corrigé selon un procédé selon la revendication 11.

14. Entraînement linéaire (LA) présentant un dispositif de commande (SE), au moins un segment (Seg), un ou plusieurs patins (L, L*), au moins une unité de commande (U) ainsi qu'au moins un capteur (PS), le dispositif de commande (SE) ou l'unité de commande respective étant réalisée pour l'exécution d'un procédé selon l'une des revendications précédentes.

15. Installation, en particulier machine de production, machine-outil, machine d'empaquetage ou installation de remplissage présentant un entraînement linéaire (LA) selon la revendication 14.
